# EUROPEAN PATENT APPLICATION

(11) **EP 0 909 091 A1**
(43) Date of publication of application: **14.04.1999**
(21) Application number: 97402361.6
(22) Date of filing: 07.10.1997
(51) Int. Cl.: H04N 7/00, H04N 5/00, G06F 12/02

(54) **Memory manager**

(71) Applicant: CANAL+ Société Anonyme, 75711 Paris Cedex 15 (FR)
(72) Inventor: Liao, Hongtao, 78180 Montigny-Btx (FR)
(74) Representative: Cozens, Paul Dennis

(57) **Abstract**

An apparatus for processing digital audio-visual data, notably a decoder for a digital television system, comprising a data processing system including a memory and a memory manager for allocating and storing objects in the memory, and in which a first set of objects 4610 are allocated by the memory manager with reference to a set of handles 4600, each handle including a reference to the memory address of a corresponding object, and in which a second set of objects 4620 are allocated and stored directly in the memory without reference to a handle.

## Description

The present invention relates to an apparatus for processing digital audio-visual data, in particular a decoder for processing audio-visual data associated with a digital television system, including a memory and memory manager.

A software based system for controlling a decoder in a digital television system that uses a virtual machine and run time engine for processing digital television data and downloaded applications is described in the PCT application PCT/EP97/02116. This system possesses a number of advantages in comparison with previously known systems for receiver/decoders, notably in regard to the independence of the application layers of the system to the hardware elements of the manufactured decoder through the use of a virtual machine structure.

Notwithstanding the advantages of this system, there is a need to provide a more efficient handling of the memory used by the system in processing commands. The system described in this application relies on a device manager to manage the memory elements. In this device all calls to the memory from the virtual machine are treated equally. There is furthermore no discussion of how use of memory space may be optimized by the device manager.

The device manager forms part of a layer below the virtual machine and implemented by the manufacturer of the receiver/decoder rather than the system authority. There is therefore also the risk than the implementation chosen by the receiver/decoder manufacturer will be less than optimal as compared to the needs of the higher level elements of the system, such as the virtual machine, designed by the system authority.

It is an object of the present invention in its main and preferred aspects to overcome the problems of the prior art systems and to provide an improved system for management of memory within an audio-visual apparatus.

According to the present invention there is provided an apparatus for processing digital audio-visual data comprising a data processing system including a memory and a memory manager for allocating and storing objects in the memory, and in which a first set of objects are allocated by the memory manager with reference to a set of handles, each handle including a reference to the memory address of a corresponding object, and in which a second set of objects are allocated and stored directly in the memory without reference to a handle.

By dividing the memory between objects accessible by a handle and directly retrievable objects, the present invention distinguishes between a first set of objects which may treated in a number of ways by the memory manager to optimise memory space, as will be described below, and those more-frequently accessed objects which can be addressed directly without the need to refer to a handle.

In particular, in one embodiment, an object in the second set may be retrievable directly by other elements in the data processing system without the need to pass via the memory manager. The memory manager may nevertheless be required to allocate and store objects of the second set in the memory in order to maintain control over the memory contents.

In one embodiment, the handles may stored in the memory in question. However, other realisations are possible in which the handles are stored in another memory space. The handles may stored dynamically or in a static array.

In one implementation, the memory manager is adapted to displace objects of the first set within the memory and to change the address reference stored in the corresponding handle accordingly. Objects may be displaced, for example, when no more objects can be stored in the memory. The displacement may be carried out, for example, in accordance with an appropriate compaction algorithm. In this way, free memory space may be optimized whilst keeping track simply and efficiently of stored objects.

In order to allow access at all times of objects of the second type, these objects are preferably non-displaceable within the memory. Other realisations are however imaginable where, for example, displacement of an object of the second type would be associated with a procedure for changing the address of the object where it occurs in the system.

The present invention is particularly applicable to an embodiment where the virtual machine has a multithread architecture, in which a thread may be temporarily suspended during the course of its execution to permit execution of another thread. A multithread virtual machine will be described in detail below.

In such a case, the multi-thread virtual machine may preferably include an internally generated garbage collector thread, the virtual machine acting upon execution of this thread to free objects in the memory not currently referenced at that time. Alternatively, or additionally, execution of the garbage collector thread may also cause the virtual machine to carry out displacement of objects of the first set according to a compaction algorithm in order to group together the maximum amount of free memory space.

The memory space in question may correspond to the RAM memory of the system, although the present invention applies equally to other memory components, such as FLASH or EEPROM units.

Whilst the present invention is particularly applicable to a decoder for receiving and processing digital television systems, it will be understood that the principles of the data processing system set out in this application may also be applied to other devices for handling digital audio-visual data, such as digital video recorders and the like. In the context of a decoder for a digital television broadcast, the hardware devices of the decoder can include an MPEG demultiplexer together with a tuner, a serial interface, a parallel interface, a modem and one or more smart card readers.

In the present application, the term "decoder" is used to apply to an integrated receiver/decoder for receiving and decrypting an encoded broadcast, the receiver and decoder elements of such a system as considered separately, as well as to a digital television receiver for receiving non-encrypted broadcasts.

There will now be described, by way of example only, an embodiment of the present invention, with reference to the attached figures, in which:
Figure 1 shows an overall view of a digital television system;
Figure 2 shows the elements of an interactive system within the digital television system of Figure 1;
Figure 3 shows the architecture of the software based system implemented within the receiver/decoder of the present invention;
Figure 4 shows the architecture of the virtual machine within the system of Figure 3, including in particular an event manager package, an interpretation package and a memory package;
Figure 5 shows the structure of the interpreter used in the virtual machine;
Figure 6 shows the thread handling within the virtual machine;
Figure 7 shows the operation of the event manager and scheduler of the virtual machine;
Figure 8 shows the management of the memory pool by the virtual machine.

### DIGITAL TELEVISION NETWORK

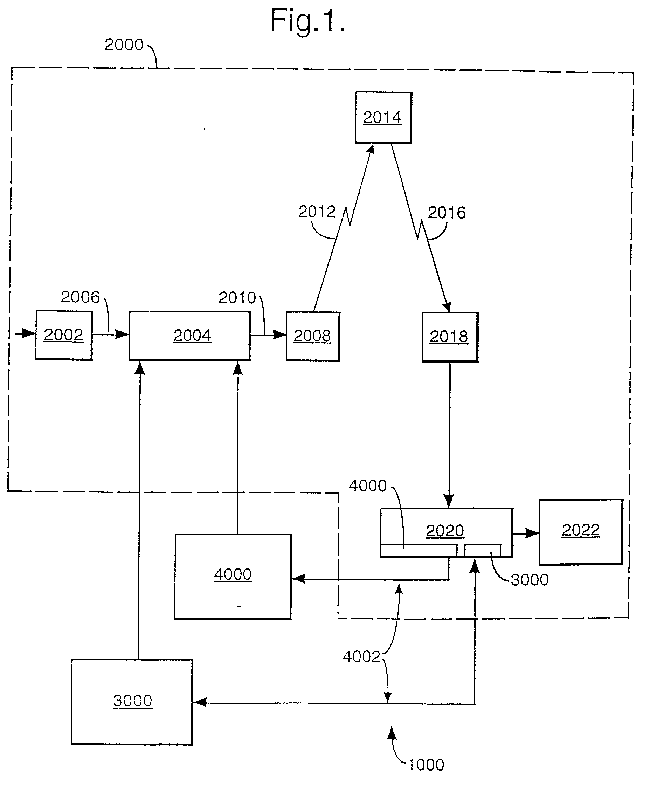

An overview of a digital television system 1000 according to the present invention is shown in Figure 1. The invention includes a mostly conventional digital television system 2000 that uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006.

The multiplexer 2004 receives a plurality of further input signals, assembles one or more transport streams and transmits compressed digital signals to a transmitter 2008 of the broadcast centre via linkage 2010, which can of course take a wide variety of forms including telecommunications links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2020. Using the decoder 2020 and smartcard, the end user may purchase commercial offers in either a subscription mode or a pay-per-view mode.

### INTERACTIVE SYSTEM WITHIN THE DIGITAL TELEVISION NETWORK

An interactive system 4000, also connected to the multiplexer 2004 and the receiver/decoder 2020 and again located partly in the broadcast centre and partly in the decoder, enables the end user to interact with various applications via a modemmed back channel 4002.

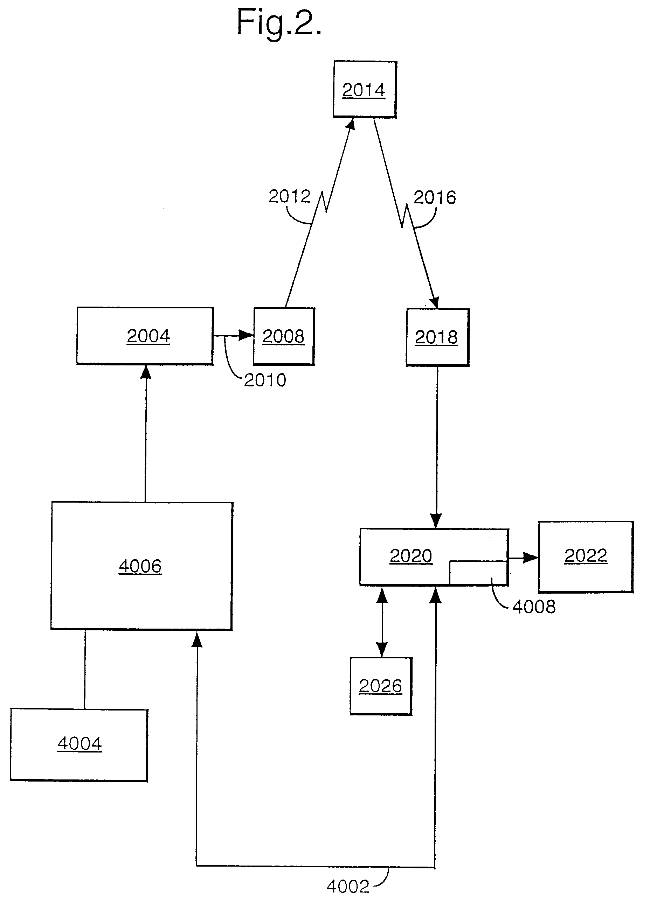

Figure 2 shows elements of the general architecture of the interactive television system 4000 comprising in overview four main elements:
1. An authoring tool 4004 at the broadcast centre or elsewhere for enabling a broadcast supplier to create, develop, debug and test applications.
2. An application and data server 4006, at the broadcast centre, connected to the authoring tool 4004 for enabling a broadcast supplier to prepare, authenticate and format applications and data for delivery to the multiplexer and scrambler 2004 for insertion into the MPEG-2 transport stream (typically the private section thereof) to be broadcast to the end user
3. A data processing system 4008 at the receiver/decoder for receiving and processing downloaded applications and data and for managing communication with the other elements of the interactive system and the hardware elements of the receiver/decoder, the system 4008 including a virtual machine with a run time engine (RTE) implemented as executable code installed in the receiver/decoder.
4. A modemmed back channel 4002 between the receiver/decoder 2020 and the application and data server 4006 to communicate signals instructing the server 4006 to insert data and applications into the MPEG-2 transport stream at the request of the end user. Information may also be passed in the other direction.

The receiver/decoder 2020 includes a number of devices for communicating with exterior devices within the interactive system, such as an tuner for tuning the receiver, an MPEG demultiplexer for demultiplexing the MPEG signal, a serial interface, a parallel interface, a modem and one or two card readers adapted to read, for example, credit cards or subscription smart cards issued with the system. The characteristics of such devices are well known in the field of digital television systems and will not be described here in any more detail.

Similarly, the sorts of interactive applications that may be provided (home banking, teleshopping, downloading of computer software) will be apparent to those in the field and will not be described in more detail. While the decoder system architecture described below is particularly apt for interactive applications it will also be appreciated that the architecture described can be used in simpler non-interactive digital TV systems, such as a conventional pay TV system.

### DECODER SYSTEM ARCHITECTURE

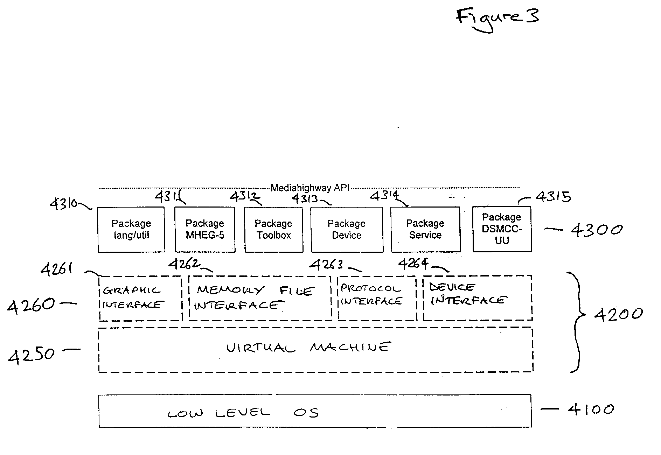

Turning now to the architecture of the system within the receiver/decoder shown in Figure 3, it will be seen that a layered architecture is used. The first layer 4100 represents the operating system of the hardware of the receiver/decoder. This is a real-time operating system chosen by the manufacturer to control the hardware elements of the receiver/decoder. The real-time operating system has a relatively fast response time in order to be able to correctly synchronise hardware operations. Event messages are passed between this layer and the middleware layer 4200 immediately above.

The data processing system 4008 sits on top of the hardware operating system and comprises a middleware layer and an application (or more correctly an application interface) layer.

The middleware layer is written in a language such as C ANSI and comprises the elements of a virtual machine 4250 and a number of interfaces 4260 including a graphical interface 4261, a FLASH/PROM memory interface 4262, a protocol interface 4263 and a device interface 4264.

As with the system set out in patent application PCT/EP97/02116 described in more detail in the introduction, the present invention uses a virtual machine in order to provide independence between upper level applications and the lower level operating system implemented by the manufacturer.

The interfaces 4260 provide the link between operations of the virtual machine and the lower level operating system 4100 and also include a number of intermediate level application modules more easily executed at this level.

The application interface (API) layer 4300 comprises a number of high level packages 4310-4314, written in an object-oriented interpretative language, such as Java. These packages provide an interface between the applications created by the service provider (interactive program guide, teleshopping, internet browser etc) and the virtual machine of the system. Examples of such applications are given below.

The lower level OS is normally embedded in the hardware components of the decoder, although in some realisations, the lower level OS can be downloaded. The middleware and application interface layer packages can be downloaded into the RAM or FLASH memory of the decoder from a broadcast transmission. Alternatively, some or all of the middleware or application interface layer elements can be stored in the ROM or (if present) FLASH memory of the decoder. As will be understood, the physical organisation of the memory elements of the decoder is distinct from the logical organisation of the memory.

### APPLICATION INTERFACE LAYER

Referring to the application interface layer 4300 shown in Figure 3, and as described above, the packages in this layer are written in an object oriented language such as Java. Each package defines a set of class libraries called on during operation of the system. In the present system the following packages are installed.

Lang/Util Package 4310. These packages define the classes necessary for the manipulation of objects by the virtual machine. These class libraries normally form part of a standard library associated with the object oriented language chosen.

MHEG-5 Package 4311. This package defines the classes associated with the manipulation of graphical objects on the television display. Such objects are distinct from audio-visual data and can make up, for example, channel identifiers or text laid over displayed images. The definition of classes within this package should respect the MHEG-5 norms defined by the standards ETS 300777-3 and ISO/ISE 13522-5 (and the standard ISO/ISE 13522-6 in the case of a Java implemented system).

Toolbox Package 4312. This package contains the classes used for downloading and decompression of information as well as the classes associated with the management of the file system and memory within the receiver/decoder and the classes associated with the connection to the internet etc.

Device Package 4313. This package defines the classes necessary for management of peripherals attached to the receiver/decoder, as discussed above and including the modem, the smart card readers, the MPEG flow tuner etc

Service Package 4314. This package defines the classes necessary for the implementation of developing higher level interactive applications, such as management of credit card data etc.

DSMCC-UU Package 4315. This package implements the protocols necessary for communication between a client and a server for data file search and reading. Implementation of this package should respect the norm ISO/IEC 13818-6 and directives defined in DAVIC part 9.

A further layer of interactive applications, written by the service provider and downloaded during broadcast as in conventional systems, will be laid over the interface packages defined above. Depending on the applications to be introduced, some of the above packages may be omitted. For example, if the service provider does not intend to provide a common way for data reading, the DSMCC-UU package may be left out of the final system.

The packages 4300 provide class libraries for an object-oriented programming environment. Their class behaviour will depend on the language chosen. In the case of a Java application, for example, a single inheritance class structure will be adhered to.

### INTERFACE LAYER

As shown, the interface layer is composed of four modules, a graphics module 4261, a memory file management module 4261, a protocol module 4263 and a device manager 4264. Whilst the modules at this level are described as interface modules their function is to provide a "glue" layer for the implementation of the application interface packages and for the operation of the virtual machine generally.

The graphics module 4261, for example, provides the creation and management of graphical objects. It asks the low level OS to display basic graphic shapes such as single pixels, lines, rectangles etc. The implementation of this module depends on the graphics capability of the low level manufacturer's OS. In some ways complementary to the MHEG-5 package 4311, these functions may be more efficiently executed at this code level than in the high level code chosen for the application layer above.

In a similar manner, the memory file management module 4262 includes low level read/write file commands associated with the memory components of the system. Typically, the hardware operating system only includes commands necessary to read/write a sector or page within a memory component. As with the graphics module 4261, this module enables a set of simpler lower level applications to be efficiently introduced in the system.

The protocol management module 4263 defines a library of communication protocols that may be called upon in communications via, for example, the TCP/IP layer of the decoder.

The device manager 4264 is slightly different from the other modules in this layer in that it provides the link or interface between the hardware operating system and the layers above, including the other modules in the interface layer and the virtual machine. Commands or event messages that are received/sent to the hardware OS from the virtual machine, for example, are necessarily passed by the device manager for conversion according to the interface specifications between the two levels.

### VIRTUAL MACHINE DESCRIPTION

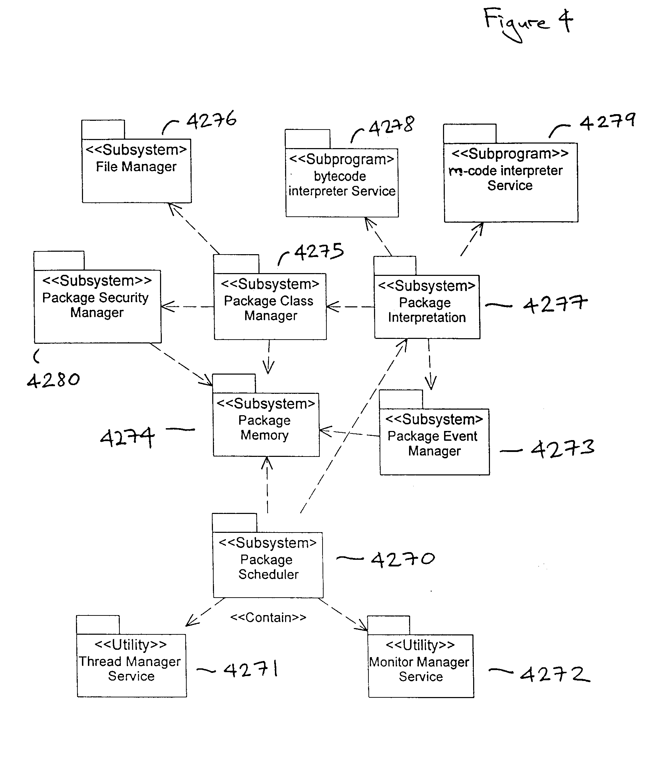

Referring now to Figure 4, the structure of the virtual machine 4250 used in the system of the present invention will be described. The virtual machine used in the present invention is a pre-emptive multithread type machine. The general characteristics of such a machine are known in other contexts outside of the audio-visual and digital television fields and the following description will focus on those areas that are the most specific to the present application.

The virtual machine is composed of a number of elements, which interact broadly as shown in Figure 4.

The scheduler 4270 composed of a thread manager service 4271 and a monitor manager service 4272 forms the heart of the multithread machine. The scheduler 4270 orders the execution of threads created by applications externally of the virtual machine and those created by the virtual machine itself (e.g. a garbage collection thread as discussed below).

The event manager 4273 handles an event routing table and the lists of events subscribed to by the threads and centralises the dispatch of event treatments.

The memory manager 4274 handles the allocation and disallocation of the memory zones within the system memory and also handles the removal from the memory of non-referenced objects (garbage collection).

The class manager 4275 charges the classes of the application code downloaded in a broadcast signal, interacting with the security manager 4280 to check the integrity of downloaded code and with the file manager 4276, which implements the applications.

The file manager 4276 carries out the implementation of the system files and the handles the mechanism of downloading of interactive applications and data.

The security manager 4280 handles the level of access permitted to downloaded applications, some applications having the ability to carry out more operations than others in relation to the file system.

The interpreter 4277 comprising a bytecode interpretation service 4278 and a "m-code" interpretation service 4279 handles the interpretation of applications written in these two codes, bytecode being associated with Java applications and m-code being the name given to a proprietary code developed by the applicants. As will be discussed, further interpretation services can be added if desired.

The operation and implementation of the class manager, file manager and security manager may be conventional. The description will now focus on the operation of the interpreter, the scheduler and event manager and the memory manager.

### INTERPRETER

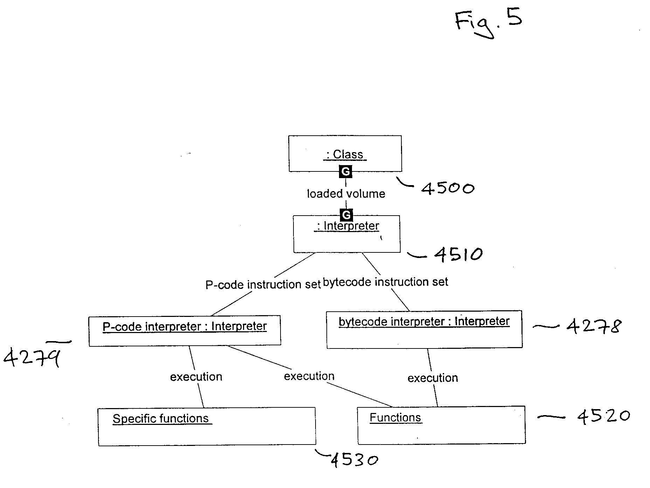

Referring now to Figure 5, the operation of the interpreter 4277 used in the embodiment of the present invention will now be described. As discussed in the introduction, the disadvantage of conventional operating systems used in decoders proposed to date has been their reliance on a single type of code for the high level applications. Although the code chosen may be a commercially available and widely known application code, problems can nevertheless arise in the case where it is necessary to maintain a field of a number of decoders using different applications written in a number of codes. The interpreter of the present system permits the interpretation of a number of types of code.

As shown, files arriving in the system, whether bytecode classes or m-code modules are evaluated by the module class manager 4500 according to the structure of the file, such that the application code delivered to the interpreter 4510 has an indication of format. In the case of a bytecode application, for example, the downloaded class file will have a characteristic identification header of 4 octets followed by a version number, also of 4 octets. The interpreter may distinguish between the codes on the basis of the presence or absence of this bytecode header.

In other embodiments, other characteristics of the code types may be used to distinguish between any number of application languages, such as the file name, for example.

Depending on the result of the format indicator, bytecode instructions are sent to the bytecode interpreter 4278, where they are executed with reference to a function library 4520 associated with the byte code instructions, as is conventionally the case with interpretative code instructions. The function library of native code instructions is defined within the virtual machine.

In the case of m-code instructions, these are passed to a m-code interpreter 4278. The majority of the m-code instructions may be implemented and executed with reference to the function library 4520 associated with byte-code instructions, and the interpreter 4278 calls on the library 4520 to execute such m-code functions wherever possible.

In some circumstances, however, some m-code instructions may need specific execution functions not easily executable with reference to a common function library. In such cases, it may be envisaged that the instructions be implemented with reference to a separate function library 4530.

### SCHEDULER AND EVENT MANAGER

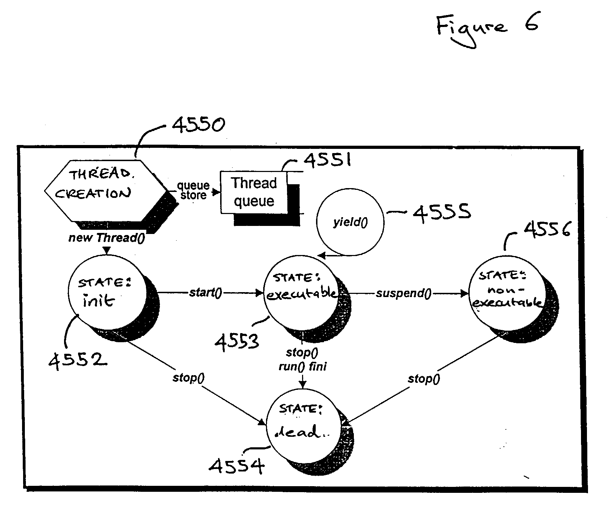

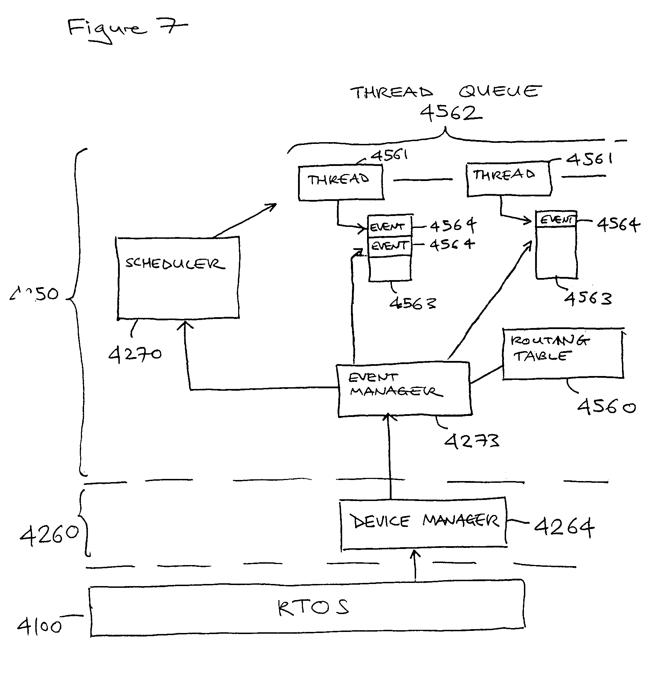

The operation of the scheduler 4270 and event manager 4273 will now be discussed, with reference to Figure 6 which shows the life of a thread within the system and Figure 7 which shows the notification of an event to a thread by the system in response to an event signalled by the lower level run-time operating system.

The description will concentrate on the handling of the creation of a thread which represents an execution context in particular resulting from a signalled event. It will be understood that a thread may be created with the initiation of a command generated by a higher level application to be sent to the hardware OS and by the return of this command. A thread may also be created within the virtual machine itself, eg a garbage collection thread.

As mentioned above, the present embodiment relies on a pre-emptive thread handling virtual machine such as that found in Java based systems. In such a machine, a plurality of threads are generated and stored in a thread queue. The scheduler inspects the thread queue and selects the thread with the highest priority to be executed. Normally, the thread that is being executed has the highest priority, but such a thread may be interrupted by a thread of yet a higher priority, as is conventional in pre-emptive threaded systems. In such a case, the state of the interrupted thread is stored and the thread re-activated once it reselected to be executed.

In certain cases, a thread may itself include a so-called "yield" instruction which causes the scheduler to suspend the execution of the thread and to inspect the thread queue for any other threads to execute. The yield instruction may be present in low priority internally generated tasks, such as a garbage collection function carried out by the system in order to remove unused objects from the memory of the system.

These aspects of the system are shown in Figure 6. The creation of a thread at 4550 gives rise to a thread stored in the thread queue 4551. The newly created thread has the state "init" at 4552. If no other thread has higher priority, the thread is executed by the instruction start() and will have the state "executable" at 4553. If the instruction stop() is executed in the thread, the thread becomes "dead" at 4554. The thread may equally achieve this state if completed as indicated by the run()fini instruction. If a yield() instruction in the thread itself arises, or a suspend() instruction external of the thread is executed, the thread is suspended and given the state "non-executable" at 4556.

Referring now to Figure 7, the interaction between the lower level operating system 4100, the event manager 4273 and the scheduler 4270 will now be described. Raw events signalled by the run-time operating system 4100 are passed via the device manager 4313 to the event manager 4273. In a preferred realisation, some prioritisation of the received events may be carried out by the device manager 4313 and/or the multitask system used in the operating system 4100. However, as will become clear, one of the advantages of the present system lies in the fact that, unlike the system described in PCT/EP97/02116, the handling of events is managed within the virtual machine 4250, thus enabling creator of the middleware layer to achieve complete control over the event handling procedure.

In the present embodiment, events sent via the device manager 4313 are classified by their code and their type. The code identifies the characteristics of the event, for example, in the case of an event generated through operation of a remote control associated with the decoder, the code can identify the button depressed. The type identifies the origin of the event, e.g. the remote control.

Upon receipt of an event signal, the event manager 4273 uses a routing table 4560 to determine the event priority and thread destination and inserts a corresponding event object 4564 into one or more threads 4561 located within the priority based thread queue 4562. One or more event objects 4564 may be stored within a given thread as represented at 4563. The event objects 4564 are stocked within the thread according to their priority classification. Event objects within the thread of an equal priority are classified by their time of arrival (FIFO).

Upon receipt of an event, the event manager 4273 signals its arrival to the scheduler 4270, which then examines the thread queue to see if a thread has a higher priority than the thread currently being executed. If so, the current thread is then suspended as described above and the new thread executed. In this manner a pre-emptive thread handling system is implemented.

In this way, the preferred embodiment allows efficient handling of threads in the decoder so as to permit the system to respond quickly to event calls, even in the case where the system is processing an existing prior event. The disadvantages of the known single processor queue system are thereby overcome.

Whilst the preferred embodiment has been described in relation to a pre-emptive system in which the arrival of an event causes the event manager to signal the scheduler to interrupt execution of a thread, other implementations are possible. For example, in a time-slice system, the scheduler can periodically interrupt execution of a thread to examine the state of the thread queue. Alternatively, the scheduler can be adapted to interrupt execution of a thread to examine the thread queue after each instruction in that the thread is treated.

### MEMORY MANAGER

As will be appreciated, in the context of receiver/decoder, the management of the memory pool within the system is particularly important, since memory space is relatively restricted as compared to for example, a PC or other hard disk based platform. In the following description, the memory pool corresponds to the memory space within the RAM of the receiver/decoder. However, as mentioned above, the correspondence between the physical and logical organisation of the memory is not exact and the memory pool described below may be located in or shared between other physical memory devices, such as a FLASH memory, an EEPROM etc, within the receiver/decoder.

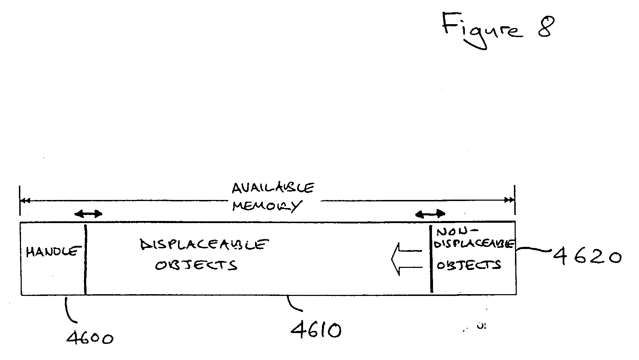

Referring now to Figure 8, this shows the organisation of the available memory in the system. It will be seen that the memory space is shared between a pool of handles 4600, a pool of displaceable objects 4610 and a pool of non-displaceable objects 4620.

Each object in the pool 4610 is identified by and corresponds to a handle stored in the pool 4600. The relation between a handle and its corresponding object is managed by the memory management package 4274 (see Figure 4) which also controls the access to the pool. All calls to objects in the pool are made by its handle. The boundary between the pools 4600 and 4610 is movable. When a new object is to be stored in memory a handle is created in the pool 4600 including a pointer to the address of the object within the pool 4610. In such a case, the list of handles will be increased by one. The handles are organised in a list formation in the pool to permit compactage by the memory manager.

Objects will be allocated in the pool as needed and according to the space available. In the case that an object allocation is demanded which requires more space in one block than is available, it will be necessary to compact the objects already allocated in the memory. The compaction of the objects in the memory can be carried out according to any known compacting algorithm, for example, a copy-compact algorithm. In the present embodiment, the Mark Sweep compact algorithm is used. In order to compact space, the objects are moved around in the zone 4610, so as to group objects more closely together, avoiding any spaces between adjacent objects. In this way, all free memory space is clustered together in a block so as to allocate for a new object in the pool 4610.

As mentioned above, the memory management package maintains the correspondence between handles in the pool 4600 and objects in the pool 4610 and the new addresses of the objects in the pool will be updated into the equivalent handles for future access.

Whilst the use of a handles to access certain objects enables the system to optimise memory location in the pool, the process increases the time needed to access such objects, since it is always necessary to first retrieve the handle in order to look up the address of the object. In certain situations and for objects corresponding to certain designated events a more rapid access time may be required.

In such a case, the objects can be allocated in a pool of non-displaceable objects 4620. The address of such objects is fixed within the pool. There is thus no need for the creation of a handle and the objects are used directly by the system, thereby simplifying the access procedure for these special objects.

Again, as with the boundary between the pools 4600 and 4610, the boundary between the pools 4620 and 4610 will be shifted depending on the information stocked in the pool 4620.

In the event, for example, that a non-displaceable object is be allocated to the pool 4620 and there is insufficient space due to the arrangement of displaceable objects in the pool 4610, a compaction of the displaceable objects may be carried out, as described above. Once the objects in the pool are re-organised so as to liberate the maximum amount of space it may then be possible to allocate a non-displaceable block in the pool 4620.

The choice of which objects are displaceable and which objects are non-displaceable is at the discretion of the designer. For example, objects corresponding to the system may be chosen as non-displaceable in view of the importance of these objects, whilst high level application objects may be displaceable. In certain instances, displaceable objects can be temporarily locked into place so as to be considered as non-movable objects.

In order to eliminate unwanted objects from the memory pool the system may also include a so-called garbage collection. This involves the creation of a special garbage collector thread of the lowest priority which will be addressed by the scheduler in the event that no other threads are currently stored in the queue. Upon execution, all displaceable objects currently allocated in the pool that are not being referenced at that time will be freed. The garbage collector thread may also carry out compaction of all other displaceable objects along the lines described above.

The creation of a garbage collector thread is known in the context of other multithread systems used in other applications outside of a digital television system and will not be discussed in any further detail here. However, it will be appreciated that use of a garbage collection procedure in combination with the other memory management techniques described above provides particular advantages in the present context.

## Claims

1. An apparatus for processing digital audio-visual data comprising a data processing system including a memory and a memory manager for allocating and storing objects in the memory, and in which a first set of objects are allocated by the memory manager with reference to a set of handles, each handle including a reference to the memory address of a corresponding object, and in which a second set of objects are allocated and stored directly in the memory without reference to a handle.

2. An audio-visual apparatus as claimed in claim 1 in which objects in the second set are allocated and stored in the memory by the memory manager but may be retrieved directly by other elements of the data processing system.

3. An audio-visual apparatus as claimed in claim 1 or 2 in which the set of handles are also stored in the memory.

4. An audio-visual apparatus as claimed in any of claims 1 to 3 in which the memory manager is adapted to displace objects of the first set within the memory and to change the address reference stored in the corresponding handle accordingly.

5. An audio-visual apparatus as claimed in claim 4, in which objects of the first set are displaced within the memory by the memory manager when no more objects may be stored in the memory without displacement of the existing stored objects.

6. An audio-visual apparatus as claimed in claim 4 or 5, in which objects of the first set are displaced according to a compaction algorithm in order to group together the maximum amount of free memory space within the memory, as calculated by the compaction algorithm.

7. An audio-visual apparatus as claimed in any preceding claim in which objects of the second set are non-displaceable within the memory.

8. An audio-visual apparatus as claimed in any preceding claim in which the data processing system includes a virtual machine, the memory manager forming part of the virtual machine.

9. An audio-visual apparatus as claimed in claim 8 in which the virtual machine has a multithread architecture, in which a thread may be temporarily suspended during the course of its execution to permit execution of another thread.

10. An audio-visual apparatus as claimed in claim 9 in which the multi-thread virtual machine includes an internally generated garbage collector thread, the virtual machine acting upon execution of this thread to free objects in the memory not currently referenced at that time.

11. An audio-visual apparatus as claimed in claim 10 in which execution of the garbage collection thread also causes the virtual machine to carry out displacement of objects of the first set according to a compaction algorithm in order to group together the maximum amount of free memory space.

12. An audio-visual apparatus as claimed in any preceding claim in which the memory is defined by one or more RAM components.

13. An audio-visual apparatus as claimed in any preceding claim in which the apparatus is a decoder for a digital television system and comprises one or more hardware devices for transmission and reception of audiovisual data.

14. An audio-visual apparatus as claimed in claim 13 in which one of the devices comprises an MPEG demultiplexer.

15. An audio-visual apparatus as claimed in claim 13 or 14 in which the hardware devices may comprise at least one of the following: a tuner, a serial interface, a parallel interface, a modem and one or more smart card readers.
